# EUROPEAN PATENT SPECIFICATION

(11) **EP 1 995 092 B1**
(45) Date of publication and mention of the grant of the patent: **31.03.2010**
(21) Application number: 07425308.9
(22) Date of filing: 22.05.2007
(51) Int. Cl.: B60H 1/00

(54) **Air treatment assembly for vehicles**
Luftverarbeitungseinheit für Fahrzeuge
Ensemble de traitement d'air pour véhicules

(43) Date of publication of application: 26.11.2008
(73) Proprietor: DENSO THERMAL SYSTEMS S.p.A., 10046 Poirino (Torino) (IT)
(72) Inventor: Carena, Bartolomeo c/o Denso Thermal Systems S.p.A., 10046 Poirino (Torino) (IT)
(74) Representative: Marchitelli, Mauro

(56) References cited:
- EP-A- 1 700 722
- EP-A1- 1 254 796
- DE-A1- 19 701 872
- FR-A- 2 249 300

## Description

The present invention relates to an air treatment assembly for vehicles of the type comprising:
- an external casing of plastic material having at least one seat, said seat having an opening on the surface of said casing and extending along a main direction oriented substantially perpendicularly to said opening,
- at least one heat exchanger including a pipe-and-fin heat exchange core comprising a plurality of pipes with axes parallel to each other extending longitudinally, a base plate fixed to the ends of the pipes and a collecting tank sealed to said base plate, said exchanger having a cross-section with a shape corresponding to that of said opening and being intended to be inserted into said seat along a direction parallel to said longitudinal direction according to a generally drawer-like arrangment, and
- a fastening arrangement to hold the exchanger in said seat.

An air treatment assembly with the above characteristics is, for example, known from document FR 2 249 300, which is considered as the closest prior art, and from European patent application EP-A-1 700 722 in the name of the same applicant. The assembly described in that document has a main body in which a number of seats are formed. The components necessary for operation of the assembly (heat exchanger, evaporator, etc) are slidably inserted inside their respective seats and held in place by fastening elements of the "bridge" type. These fastening elements are detached and independent with regard to the main body. This increases the number of components of the assembly and involves additional operations for application of the fastening elements. These fastening elements might also be mislaid during maintenance operations. During operation of the heat exchange assembly, furthermore, a draft of air is forced to pass through the heat exchanger and this induces localised over-pressure in the pipes upstream of it. It has been observed that this over-pressure causes a loss of airflow with consequent reduced performance of the assembly. Again during operation it has also been observed that a certain amount of noise is produced due to the vibrations to which both the exchanger and the casing of the heat exchange assembly are subjected.

The purpose of the present invention is to improve air treatment assemblies of the type described and in particular to reduce the number of components and improve the hold of the heat exchanger in the main body. Further objects of the present invention concern improving the seal of the heat exchange assembly versus the external environment and at the same time reducing noisiness thanks to more efficient damping of vibrations.

These and other goals are achieved by an air treatment assembly for vehicles according to the independant claim 1.

The present invention will now be described with reference to the attached drawings, provided purely by way of non-limiting example, in which:
- figure 1 is a partial perspective view of an air treatment assembly according to the present invention,
- figure 2 is a cross-section along line II-II in figure 1,
- figure 3 is an enlarged detail of the part indicated by arrow III in figure 2, and
- figure 4 is a perspective view of a sealing element according to the invention.

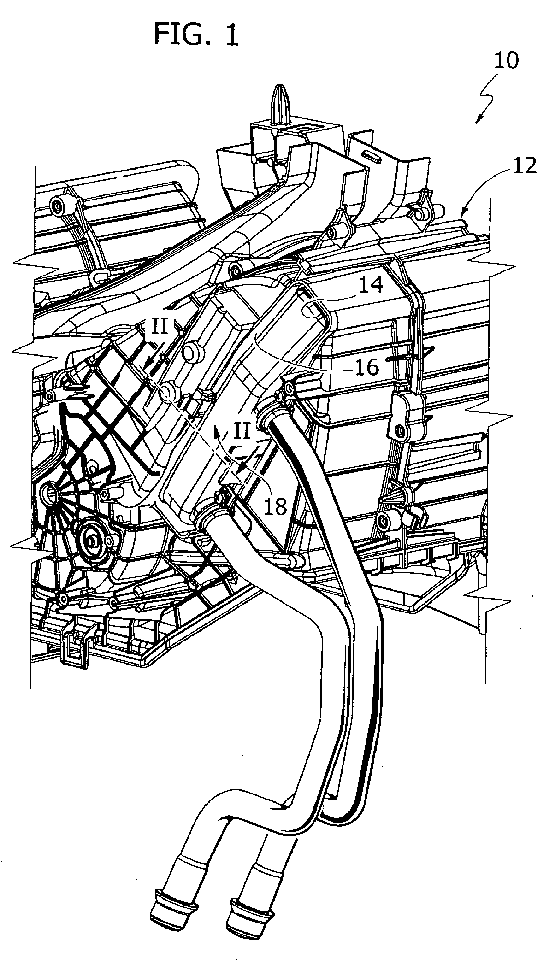

With reference to figure 1, reference number 10 indicates an air treatment assembly for vehicles according to the invention. The air treatment assembly 10 is a system capable of producing a flow of treated air, that may be heated, conditioned, etc, destined subsequently to be conveyed into the passenger compartment of a vehicle. An assembly of this type typically includes a fan, heat exchangers and a system of ducts to convey the flow of air through the exchangers and subsequently towards the vehicle's passenger compartment.

The assembly 10 comprises a casing 12, obtained through injection moulding of plastic material, in which a seat 14 is formed having an opening onto the surface of the casing 12, that may be totally or partially surrounded by surfaces 16. The seat 14 extends from the opening towards the inside of the casing 12 along a direction substantially perpendicular to the opening.

In the seat 14 is housed a heat exchanger 18 having a heat exchange core 18a comprising tubes with axes parallel to each other, and fins that connect the tubes transversely. The heat exchange core is delimited at the opposite ends by two base plates 18b, only one of which is shown in the figures. Each base plate 18b is sealed to a collector tank 18c through folding of its edge 20. The heat exchanger is a component known per se, thus further construction details are omitted so as not to burden the description and the attached drawings with details that are not within the scope of the present invention.

The heat exchanger 18 is inserted into the seat 14 of the casing 12 in the general manner of a "drawer".

According to the present invention, the fastening arrangement holding the exchanger 18 in its seat 14 comprise an annular sealing element 22 of elastomeric material. The sealing element 22 has an inner surface 24 and an outer surface 26; these surfaces are destined respectively to co-operate with the heat exchanger 18 and with the surfaces 16 of the seat 14.

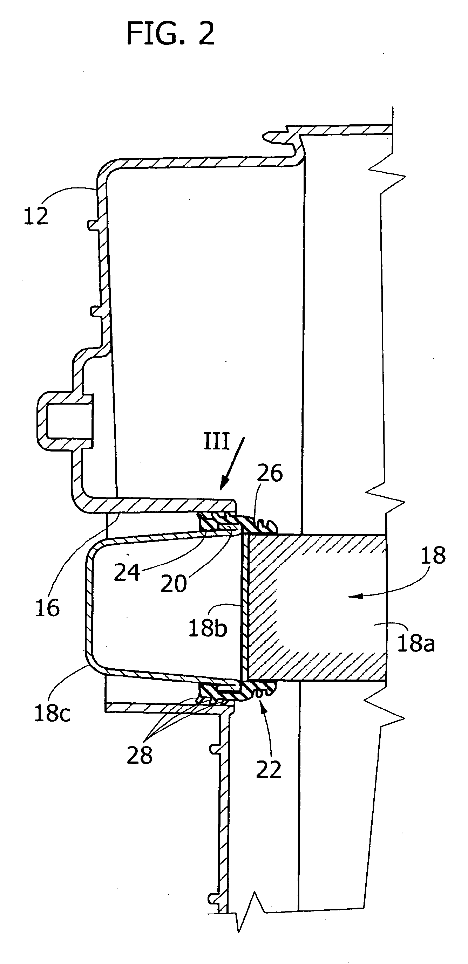

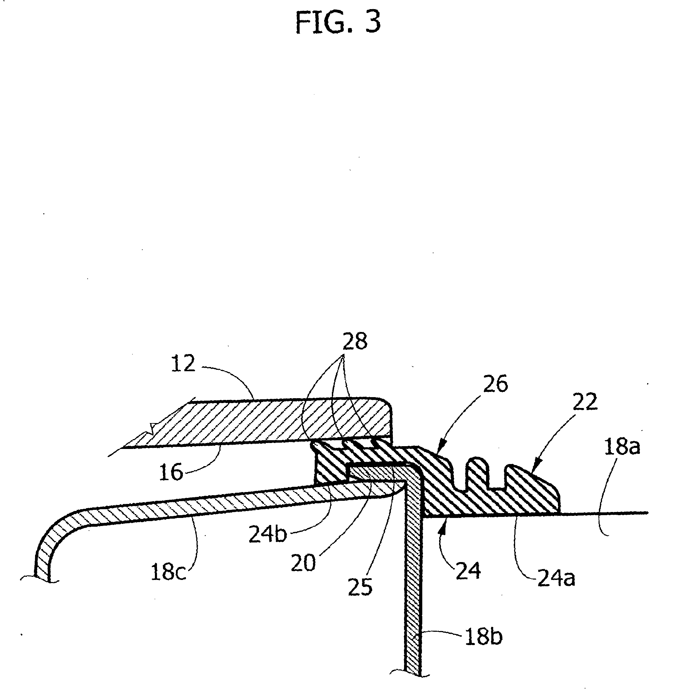

With reference to figures 2 and 3, a first portion 24a and a second portion 24b of the inner surface 24 extend in contact with the heat exchange core 18a and with the collector tank 18c. Between the first portion 24a and the second portion 24b an annular hollow 25 is obtained in which is housed the edge 20 of the base plate 18b. Naturally, any changes in the geometry of the exchanger 18 and of the way in which the heat exchange core 18a and the collector tank 18c are coupled will lead to respective changes in the conformation of the inner surface 24 of the sealing element 22.

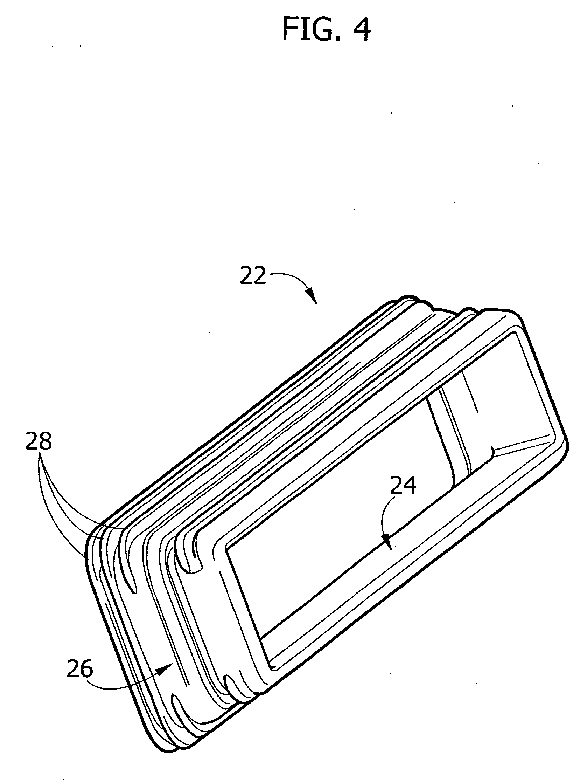

On the external surface 26 of the sealing element 22 around the entire annular extension projecting formations 28 are obtained, that extend radially along a direction that is inclined with regard to the longitudinal direction of the exchanger 18. The number of projecting formations may differ according to the application, for example as a function of the size of the exchanger 18. According to a preferred embodiment, the sealing element 22 shown in figure 4 has a substantially rectangular annular shape and presents three projecting formations on its longer sides and two on its shorter sides.

Before it is assembled in its seat 14, the sealing element 22 is assembled onto the exchanger 18. In particular, the first portion 24a and the second portion 24b of the inner surface 24 are placed in contact respectively with the surfaces of the heat exchange core 18a and of the collector tank 18c, whereas the edge 20 is positioned in the annular hollow 25. This type of assembly provides the sealing element 22 with a secure hold on the body of the exchanger 18 along the longitudinal direction.

At the moment of insertion, the exchanger 18 is introduced into the seat 14 from the part opposite the collector tank 18c. During the last portion of insertion, before the stop (not shown) is reached, the projecting formations 28 of the sealing element 22 are deformed against the surfaces 16 along a direction that is contrary to that of insertion. The inclined direction of the projecting formations 28, which is with the direction of insertion, makes it easy to introduce the exchanger 18 in the seat 14 up to the stop. In this way the exchanger 18 is efficaciously held along all directions. Indeed, movements of the exchanger in the plane perpendicular to its longitudinal direction, that is in the plane perpendicular to the principal direction of the seat 14, are strongly attenuated thanks to the elastic action typical of the sealing element 22. In addition, the exchanger 18 is also locked against extraction by the projecting formations 28, that are compressed by the surfaces 16 of the seat 14. During insertion, the projecting formations 28 have been deformed by the surfaces 16 and the result is a condition of compression of the sealing element 22.

At the moment of extraction of the heat exchanger 18, the projecting formations 28, due to their inclination, "brace" themselves, thereby increasing the compression and thus the friction between the sealing element 22 and the seat 14. It follows that the force required to extract the exchanger 18 from the seat 14 is greatly superior to that required for its insertion. Furthermore, it is clear that the heat exchanger 18 is held in place solely by means of the sealing element, without the need to provide for further fastening devices.

A further advantage with regard to known techniques consists in an improved seal of the heat exchange assembly versus the external environment, thanks to the insulating function that the deformed projecting formations play when the exchanger is inserted into its seat. Lastly, the sealing element of elastomeric material also provides attenuation of the vibrations of the exchanger and of the casing, with a consequent reduction in the noisiness of the heat exchange assembly.

## Claims

1. Air treatment assembly for vehicles, comprising:
- an external casing (12) of plastic material having at least one seat (14), said seat (14) having an opening on the surface of said casing (12) and extending along a main direction oriented substantially perpendicularly with regard to said opening,
- at least one heat exchanger (18) comprising a tube-and-fin heat exchange core (18a) including a plurality of tubes with axes parallel to each other extending in a longitudinal direction, a base plate (18b) fixed to the ends of said tubes, a collector tank (18c) sealed to said base plate (18b), the base plate (18b) having an edge (20) folded around the collector tank (18c), said heat exchanger (18) having a cross-section with a shape corresponding to that of said opening and being intended to be inserted into said seat (14) along a direction parallel to said longitudinal direction according to a generally drawer-like arrangement, and
- fastening means (22) to hold the exchanger (18) in said seat (14), the fastening means (22) consisting of an annular sealing element (22) of elastomeric material having an inner surface (24) and an outer surface (26) with projecting formations (28) which, on insertion of the exchanger (18) into said seat (14), deform in contact with at least one surface (16) of said opening in a contrary direction to that of insertion, said projecting formations (18) causing a condition of compression of the sealing element that constrains by friction the exchanger (18) along a direction contrary to the direction of insertion,
**characterised in that** the sealing element (22) is assembled onto the exchanger (18) such that a first portion (24a) and a second portion (24b) of the inner surface (24) are placed in contact respectively with surfaces of the heat exchange core (18a) and of the collector tank (18c) such that the sealing element (22) is constrained to the exchanger (18) along said longitudinal direction, the sealing element (22) having on its inner surface (24) a continuous annular hollow (25) in which said edge (20) of the base plate (18b) is housed, whereas other portions of the inner surface (24) delimiting said hollow (25) are in contact with the respective surfaces of the heat exchange core (18a) and the collector tank (18c).

2. Air treatment assembly according to claim 1, **characterised in that** the sealing element (22) is produced by moulding with an annular shape corresponding to the shape of said opening.

3. Air treatment assembly according to claim 2, **characterised in that** the sealing element (22) has a substantially rectangular annular shape.

4. Air treatment assembly according to claim 1, **characterised in that** the projecting formations (28) extend around the sealing element (22) in a continuous manner.

5. Air treatment assembly according to claim 1, **characterised in that** the projecting formations (28) extend around the sealing element (22) in a discontinuous manner.

6. Air treatment assembly (10) according to claim 1, **characterised in that** the projecting formations (28) on the outer surface (26) of the sealing element (22) extend, starting from their base, along a direction inclined with regard to the principal direction.

7. Air treatment assembly according to claim 3, **characterised in that** said projecting formations (28) are in different numbers on the sides of the sealing element (22).

8. Air treatment assembly according to claim 7, **characterised in that** the shorter sides of the sealing element (22) present two projecting formations (28), and **in that** the longer sides of the sealing element (22) has three projecting formations (28).

## Patentansprüche

1. Luftaufbereitungsanordnung für Fahrzeuge, mit:
- einem Außengehäuse (12) aus Plastikmaterial mit mindestens einem Sitz (14), wobei der Sitz (14) eine Öffnung in der Oberfläche des Gehäuses (12) hat und sich entlang der Hauptrichtung erstreckt, die im Wesentlichen senkrecht zur Öffnung ausgerichtet ist,
- mindestens einem Wärmetauscher (18), der einen Rippenrohr- Wärmeaustauschkern (18a) mit einer Mehrzahl Rohre aufweist, deren Achsen sich parallel zueinander in Längsrichtung erstrecken, eine Basisplatte (18b), die an den Enden der Rohre befestigt ist, einen Sammelbehälter (18c), der an der Basisplatte (18a) abgedichtet ist, wobei die Basisplatte (18b) einen um den Sammelbehälter (18c) gefalteten Rand (20) hat, wobei der Wärmetauscher (18) einen Querschnitt hat, dessen Form der der Öffnung entspricht, und der dazu vorgesehen ist, in den Sitz (14) entlang einer Richtung parallel zur Längsrichtung gemäß einer im Wesentlichen schubladenartigen Anordnung eingeführt zu werden, und
- ein Befestigungsmittel (22) zum Halten des Wärmetauschers (18) in diesem Sitz (14), wobei das Befestigungsmittel (22) aus einem ringförmigen Dichtelement (22) aus Elastomermaterial besteht, das eine innere Oberfläche (24) und eine äußere Oberfläche (26) mit vorspringenden Formen (28) hat, die sich beim Einführen des Wärmetauschers (18) in den Sitz (14) bei Kontakt mit mindestens einer Oberfläche (16) der Öffnung in Gegenrichtung zur Einführrichtung verformen, wobei die vorspringenden Formen (18) einen Kompressionszustand des Dichtelements verursachen, der den Wärmetauscher (18) in Gegenrichtung zur Einführrichtung durch Reibung arretiert,
**dadurch gekennzeichnet, dass** das Dichtelement (22) am Wärmetauscher (18) so angebaut ist, dass ein erster Abschnitt (24a) und ein zweiter Abschnitt (24b) der inneren Oberfläche (24) jeweils in Kontakt mit den Oberflächen des Wärmeaustauschkerns (18) entlang der Längsrichtung gebracht werden, wobei das Dichtelement (22) an seiner inneren Oberfläche (24) einen durchgehenden ringförmigen Hohlraum (25) hat, der den Rand (20) der Basisplatte (18b) aufnimmt, während andere Abschnitt der inneren Oberfläche (24), die den Hohlraum (25) begrenzen, in Kontakt mit den jeweiligen Oberflächen des Wärmeaustauschkerns (18a) and des Sammelbehälters (18c) stehen.

2. Luftaufbereitungsanordnung nach Anspruch 1, **dadurch gekennzeichnet, dass** das Dichtelement (22) durch Formen zu einer Ringform entsprechend der Form der Öffnung hergestellt wird.

3. Luftaufbereitungsanordnung nach Anspruch 2, **dadurch gekennzeichnet, dass** das Dichtelement (22) eine im Wesentlichen rechtwinklige Ringform hat.

4. Luftaufbereitungsanordnung nach Anspruch 1, **dadurch gekennzeichnet, dass** die vorspringenden Formen (28) in durchgängiger Weise um das Dichtelement (22) verlaufen.

5. Luftaufbereitungsanordnung nach Anspruch 1, **dadurch gekennzeichnet, dass** die vorspringenden Formen (28) in unterbrochener Weise um das Dichtelement (22) verlaufen.

6. Luftaufbereitungsanordnung (10) nach Anspruch 1, **dadurch gekennzeichnet, dass** die vorspringenden Formen (28) auf der äußeren Oberfläche (26) des Dichtelements (22) ausgehend von ihrem Grund entlang einer Richtung verlaufen, die bezüglich der Hauptrichtung geneigt ist.

7. Luftaufbereitungsanordnung nach Anspruch 3, **dadurch gekennzeichnet, dass** verschieden viele vorspringende Formen (28) an den Seiten des Dichtelements (22) vorgesehen sind.

8. Luftaufbereitungsanordnung nach Anspruch 7, **dadurch gekennzeichnet, dass** die des Dichtelements (22) zwei vorspringende Formen (28) und dass die längeren Seiten des Dichtelements (22) drei vorspringende Formen (28) haben.

## Revendications

1. Groupe de traitement d'air pour véhicule, comprenant :
- un carter extérieur (12) en matière plastique ayant au moins un siège (14) ledit siège (14) ayant une ouverture sur la surface dudit carter (12) et s'étendant le long d'une direction principale orientée sensiblement perpendiculairement par rapport à ladite ouverture,
- au moins un échangeur de chaleur (18) comprenant un noyau d'échange de chaleur à tubes-et-ailettes (18a) incluant une pluralité de tubes avec des axes parallèles les uns aux autres s'étendant dans une direction longitudinale, une plaque de base (18b) fixée aux extrémités desdits tubes, un réservoir collecteur (18c) scellé sur ladite plaque de base (18b), la plaque de base (18b) ayant une bordure (20) repliée autour du réservoir collecteur (18c), ledit échangeur de chaleur (18) ayant une section transversale avec une forme correspondant à celle de ladite ouverture et étant destiné à être inséré dans ledit siège (14) le long d'une direction parallèle à ladite direction longitudinale selon un agencement généralement semblable à un tiroir, et
- des moyens de fixation (22) pour tenir l'échangeur (18) dans ledit siège (14), les moyens de fixation (22) étant constitués par un élément d'étanchement annulaire (22) en matériau élastomère ayant une surface intérieure (24) et une surface extérieure (26) avec des formations en projection (28) qui, lors de l'insertion de l'échangeur (18) dans ledit siège (14), se déforment en contact avec au moins une surface (16) de ladite ouverture dans une direction contraire à celle de l'insertion, lesdites formations en projection (18) provoquant une condition de compression de l'élément d'étanchement qui contraint par friction l'échangeur (18) le long d'une direction contraire à la direction d'insertion,
**caractérisé en ce que** l'élément d'étanchement (22) est assemblé sur l'échangeur (18) de telle façon qu'une première portion (24a) et une seconde portion (24b) de la surface intérieure (24) sont placées en contact respectivement avec des surfaces du noyau d'échange de chaleur (18a) et du réservoir collecteur (18c) de telle manière que l'élément d'étanchement (22) est contraint vers l'échangeur (18) le long de ladite direction longitudinale, l'élément d'étanchement (22) ayant sur sa surface intérieure (24) un creux annulaire continu (25) dans lequel est logée ladite bordure (20) de la plaque de base (18b), tandis que d'autres portions de la surface intérieure (24) qui délimite ledit creux (25) sont en contact avec les surfaces respectives du noyau d'échange de chaleur (18a) et du réservoir collecteur (18c).

2. Groupe de traitement d'air selon la revendication 1, **caractérisé en ce que** l'élément d'étanchement (22) est produit par moulage avec une forme annulaire correspondant à la forme de ladite ouverture.

3. Groupe de traitement d'air selon la revendication 2, **caractérisé en ce que** l'élément d'étanchement (22) a une forme annulaire sensiblement rectangulaire.

4. Groupe de traitement d'air selon la revendication 1, **caractérisé en ce que** les formations en projection (28) s'étendent autour de l'élément d'étanchement (22) d'une manière continue.

5. Groupe de traitement d'air selon la revendication 1, **caractérisé en ce que** les formations en projection (28) s'étendent autour de l'élément d'étanchement (22) d'une manière discontinue.

6. Groupe de traitement d'air (10) selon la revendication 1, **caractérisé en ce que** les formations en projection (28) sur la surface extérieure (26) de l'élément d'étanchement (22) s'étendent, en partant de leur base, le long d'une direction inclinée par rapport à la direction principale.

7. Groupe de traitement d'air selon la revendication 3, **caractérisé en ce que** lesdites formations en projection (28) sont en nombres différents sur les côtés de l'élément d'étanchement (22).

8. Groupe de traitement d'air selon la revendication 7, **caractérisé en ce que** les côtés courts de l'élément d'étanchement (22) présentent deux formations en projection (28), et **en ce que** les côtés longs de l'élément d'étanchement (22) possèdent trois formations en projection (28).
